# EUROPÄISCHE PATENTSCHRIFT

(11) **EP 0 995 624 B1**
(45) Veröffentlichungstag und Bekanntmachung des Hinweises auf die Patenterteilung: **21.05.2003**
(21) Anmeldenummer: 99119724.5
(22) Anmeldetag: 05.10.1999
(51) Int. Cl.: B60K 26/02

(54) **Fahrpedalmodul**
Accelerator pedal module
Pédale d'accélérateur modulaire

(30) Priorität: 19.10.1998 DE 19848087
(43) Veröffentlichungstag der Anmeldung: 26.04.2000
(73) Patentinhaber: Siemens Aktiengesellschaft, 80333 München (DE)
(72) Erfinder: Göhring, Frank, 60318 Frankfurt (DE); Wendling, Armin, 56290 Beltheim-Mannebach (DE)

(56) Entgegenhaltungen:
- DE-A- 4 300 096
- DE-C- 19 521 821

## Beschreibung

Die Erfindung befaßt sich mit einem Fahrpedalmodul mit einem in einem Gehäuse gelagerten Fahrpedal, das mit pedalkraftabhängiger Hysterese gegen die Kraft einer Rückstellfeder betätigbar ist, und einem Pedalstellungssensor, der ein der Pedalstellung entsprechendes elektrisches Signal erzeugt.

Ein derartiges Fahrpedalmodul ist aus der DE 195 17 172 A bekannt.

Bei Fahrpedalen für Kraftfahrzeuge setzen sich immer mehr sogenannte "Driveby-wire"-Systeme durch, bei denen das Fahrpedal nicht mehr wie bisher über einen Bowdenzug mit der Drosselklappe verbunden ist, sondern ein Sensor ein der Fahrpedalstellung entsprechendes elektrisches Ausgangssignal erzeugt, das über Leitungen an ein Motorsteuergerät gelangt, welches in Abhängigkeit von den Signalen die Drosselklappe über einen elektrischen Stellmotor ansteuert.

Von den bisher üblicherweise eingesetzten Bowdenzügen sind die Autofahrer bei der Betätigung des Gaspedals eine Krafthysterese gewöhnt, die von den in dem Bowdenzug wirkenden Reibkräften herrührt. Diese Reibkräfte setzen dem Niederdrücken des Pedals einen erhöhten Widerstand entgegen und entlasten beim Halten einer bestimmten Gaspedalstellung den Fuß des Fahrers von den Rückstellkräften der Rückholfeder. Der Gegendruck beim Niedertreten des Fahrpedals ermöglicht dabei eine feinfühligere Positionierung des Fahrpedals, während die Entlastung des Fußes beim Verharren in einer Fahrpedalstellung den Komfort verbessert.

Mit dem Erscheinen der "Drive-by-wire"-Systeme war man bestrebt, diese wünschenswerte Charakteristik des Fahrpedals beizubehalten, wozu eine Simulation der Eigenschaften eines Bowdenzugs mit seiner Rückholfeder notwendig war.

Zur Simulation der Hysterese verwendet man üblicherweise richtungsabhängig wirkende Reibelemente, wie sie beispielsweise in der DE 195 17 172 dargestellt sind. Diese Schrift zeigt auch die übliche spielfreie Lagerung des Fahrpedals in einem Gehäuse. Da die Lagerung des Fahrpedalhebels einerseits präzise sein muß, gleichzeitig jedoch auch sehr hohe Pedalkräfte aufnehmen muß, muß zur Vermeidung eines möglicherweise auftretenden Klemmens eine besonders hochwertige, spielfreie Lagerung (zum Beispiel Nadellager) vorgesehen werden. Die Kosten für ein solches Fahrpedalmodul sind daher beträchtlich.

Die Aufgabe der Erfindung besteht darin, ein Fahrpedalmodul zu schaffen, das hohe Pedalkräfte aufnehmen kann und dennoch nicht die Gefahr eines Verklemmens des Fahrpedals wirkt.

Erfindungsgemäß wird die Aufgabe bei einem Fahrpedalmodul der eingangs genannten Art dadurch gelöst, daß das Fahrpedal in einem nach oben Spiel aufweisenden Lagerelement schwimmend gelagert ist.

Das zumindest halb offene Lagerelement erlaubt einerseits eine exakte Lagerung des Fahrpedals und verhindert andererseits durch die nach oben bestehende Ausweichmöglichkeit zuverlässig ein mögliches Verklemmen des Fahrpedals in seiner Lagerstelle. Dabei genügt ein sehr kleiner Bewegungsspielraum, um die Klemmgefahr zuverlässig auszuräumen.

Die erfindungsgemäße Lösung kommt mit denkbar einfachen Lagerelementen, beispielsweise in Form einer Halbschale aus.

Vorzugsweise ist das Federelement eine Schraubenfeder, die über einen Hebelarm ein dem durch die Betätigungskraft um die Schwenkachse des Fahrpedals aufgebrachten Moment entgegengerichtetes Rückstellmoment erzeugt. Die durch die Schraubenfeder erzeugte Kraft ist dabei der Auflagekraft des Fahrpedals in dem Lagerelement vorzugsweise im wesentlichen entgegengerichtet.

Damit werden in dem Lagerelement sowohl die Betätigungskraft als auch die Rückstellkraft der Feder abgestützt, so daß ein erhöhtes Reibmoment beim Niederdrücken des Pedals und somit eine gewisse Hysterese entsteht.

Zum Erreichen einer bestimmten Hysteresecharakteristik ist es von Vorteil, wenn die Kontaktfläche zwischen dem Lagerelement und einer Umfangfläche des Fahrpedals als Reibpaarung mit einem bestimmten Reibkoeffizienten ausgebildet ist.

Eine derartige Gestaltung des Lagerelements und der gelagerten Fläche des Fahrpedals erlaubt ohne separate Bauteile das Erzielen einer Hysterese gewünschten Ausmaßes. Gegenüber herkömmlichen Konstruktionen mit zum Teil sehr aufwendigen gelagerten Wippen, Feder-, Reib- und Dämpfungselementen stellt dies eine erhebliche konstruktive Vereinfachung dar, die eine weitere Senkung der Herstellungskosten von Fahrpedalmodulen ohne Abstriche bei den mechanischen Eigenschaften ermöglicht.

Die Kontaktfläche zwischen dem Lagerelement und der Umfangsfläche des Fahrpedals kann auch in zwei Umfangsegmentbereiche unterteilt sein, die zwei radiale Stützstellen bilden. Dabei ist es von besonderem Vorteil, wenn wenigstens eine radiale Stützstelle bezüglich der Umfangsfläche des Fahrpedals in Umfangsrichtung verstellbar ist. Auf diese Weise läßt sich durch einfaches Verstellen einer Stützstelle die Charakteristik des Fahrpedalmoduls verändern. Damit kann eine einfache Anpassung der Reibhysterese an einen jeweiligen Fahrzeugtyp erfolgen, die dem Charakter und dem Image des Fahrzeuges entspricht. Dabei genügt die Entwicklung eines einzigen Fahrpedalmoduls mit einem Pedalgehäuse und einer optimalen Reibbelagspaarung, was erheblich zur Senkung von Entwicklungskosten beiträgt. Die Krafthysterese bestimmt sich dabei aus den Faktoren Reibungskoeffizient, Geometrie und Normalkraft.

Vorzugsweise ist der Fahrpedalweg durch einen ersten Anschlag in einer Leerlaufstellung und durch einen zweiten Anschlag in der Vollaststellung begrenzt. Der zwischen diesen beiden genau definierten Stellungen liegende Weg kann in gewünschter Weise durch den Fahrpedalsensor aufgelöst und an die Motorelektronik übermittelt werden.

Bei Fahrzeugen mit Automatikgetriebe ist es darüberhinaus wünschenswert, eine Kick-down-Stellung für das Fahrpedal vorzusehen.

Bei erfindungsgemäßen Fahrpedalmodul kann dies in der Weise realisiert werden, daß der zweite Anschlag bei einem in Vollgasstellung weiter erhöhten Pedaldruck eine zweite Schwenkachse des Fahrpedals bildet, wobei das Fahrpedal im Lagerelement abhebt und in eine Kick-down-Stellung gelangt. Die geänderte Schwenkachse des Fahrpedals führt zu einem charakteristischen Signalhub des Fahrpedalsensors, welcher der Kick-down-Stellung eindeutig zugeordnet werden kann.

Die Höhe des zum Erreichen der Kick-Down-Stellung erforderlichen Kraftsprungs läßt sich in der Weise kundenspezifisch festlegen, daß der zweite Anschlag zur Festlegung des notwendigen Pedaldrucks in einem bestimmmten Abstand zum Lagerelement angeordnet ist. Ein dritter Anschlag dient zweckmäßigerweise zur Begrenzung des Fahrpedalweges in der Kick-down-Stellung.

Als Pedalstellungssensoren werden heute in Serie üblicherweise Potentiometer mit auf der Drehachse des Pedalarms fixiertem Schleifer eingesetzt. Dies kann bei der schwimmenden Lagerung des Fahrpedals unter Umständen zu Schwierigkeiten führen, da Radialbewegungen des Schleifers auf den gehäusefesten Widerstandsbahnen zu einem von einer Drehbewegung nicht unterscheidbaren Signalhub führen können. Das Problem läßt sich beispielsweise dadurch beheben, daß statt der bisher üblichen Potentiometer magneto-resistiv arbeitende Sensoren eingesetzt werden, die ausschließlich auf die Orientierung des Magnetfeldes reagieren und somit bei radialen Bewegungen keine Signalhübe generieren.

Es ist auch möglich, bei dem erfindungsgemäßen Fahrpedalmodul mit Potentiometern zu arbeiten. Hierzu ist vorgesehen, daß wenigstens ein Potentiometer vom Fahrpedal getrennt gelagert und über Elemente mit Spielausgleich mechanisch entkoppelt von dem Fahrpedal betätigbar ist. Der Spielausgleich zur mechanischen Entkoppelung ist notwendig, um die eventuell auftretenden Verlagerungen des Fahrpedals bezüglich der Lagerstelle auszugleichen. Der Spielausgleich kann beispielsweise dadurch erreicht werden, daß an dem Potentiometer ein Hebelarm vorgesehen ist, der unter einer durch eine Druckfeder aufgebrachten Anlagekraft an einer Kurvenkontur an dem Fahrpedal anliegt. Der Hebelarm kann auch in einer Kulisse im Fahrpedal geführt sein.

Nachfolgend wird anhand der beigefügten Zeichnungen näher auf Ausführungsbeispiele der Erfindung eingegangen.

Es zeigen:
- Figur 1:: einen schematischen Querschnitt eines Fahrpedalmoduls in der Leerlaufstellung;
- Figur 2:: das Fahrpedalmodul nach Figur 1 in der Vollaststellung;
- Figur 3:: das Fahrpedalmodul nach Figur 1 und 2 in der Kick-down-Stellung;
- Figur 4:: einen Querschnitt einer weiteren Ausführungsform eines Fahrpedalmoduls in der Leerlaufstellung;
- Figur 5:: einen um 90° gedrehten Schnitt des Fahrpedalmoduls nach Figur 4;
- Figur 6:: einen Querschnitt einer weiteren Ausführungsform eines Fahrpedalmoduls in der Leerlaufstellung.

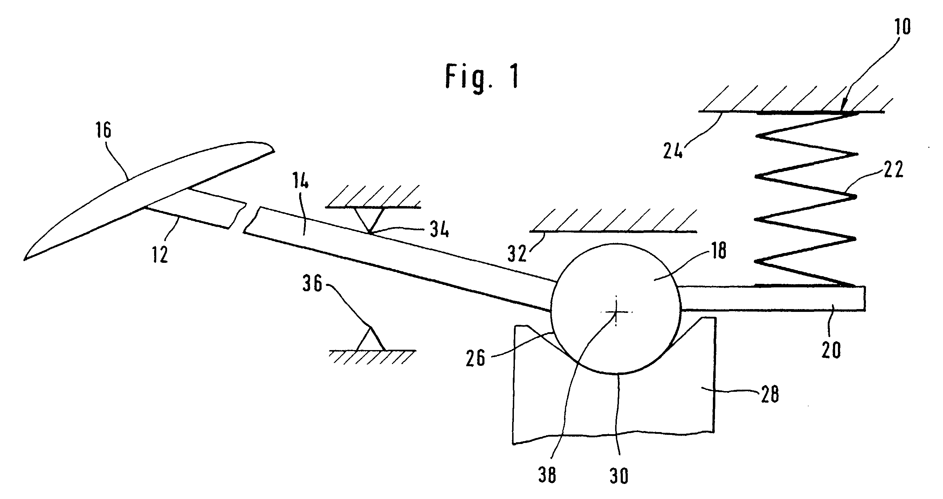

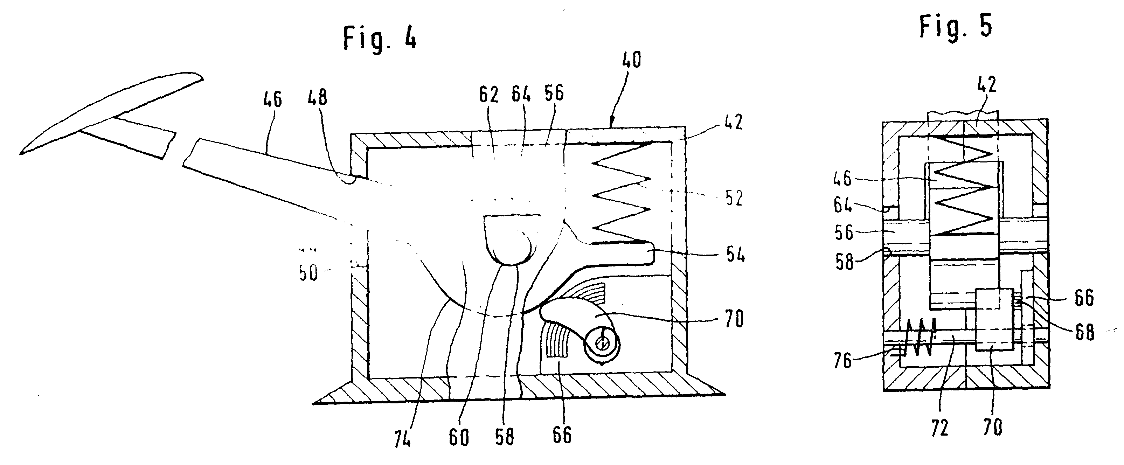

Figur 1 zeigt eine schematische Darstellung eines Fahrpedalmoduls 10, das üblicherweise ein Gehäuse (nicht dargestellt) ähnlich der in Figur 4 bis 6 beschriebenen Varianten aufweist.

Das Fahrpedalmodul 10 besitzt ein Fahrpedal 12, das aus einem Pedalhebel 14 mit einer Pedalfläche 16, einem Lagerzapfen 18 und einem zweiten Hebelarm 20 besteht. An dem zweiten Hebelarm, der gegenüber des Pedalhebels 14 in horizontaler Lage am Lagerzapfen 18 angeformt ist, greift von oben eine vorgespannte Druckfeder 22 an, die an einem gehäusefesten Gegenlager 24 abgestützt ist. Auf diese Weise erzeugt die Druckfeder 22 ein Rückstellmoment, das dem durch Druck auf die Pedalfläche 16 aufgebrachten Betätigungsmoment entgegenwirkt.

Der Lagerzapfen 18 besitzt eine Umfangsfläche 26, die in einem Lagerelement 28 abgestützt ist, das im Bereich einer eigentlichen Kontaktfläche 30 zwischen der Umfangsfläche 26 und dem Lagerelement 28 der Kontur der Umfangsfläche 26 angepaßt ist. Nach oben hin ist das Lagerelement 28 offen gestaltet, so daß der Lagerzapfen 18 nach oben hin ein gewisses Spiel besitzt, das durch einen Anschlag 32 begrenzt ist. Die Kontaktfläche 30 ist als Reibpaarung mit einem bestimmten Reibkoeffizienten ausgebildet, so daß zusätzliche Reibelemente, die zur Erzielung einer betätigungsabhängigen Krafthysterese erforderlich sind, entfallen können. Der Weg des Pedalhebels 14 ist durch einen ersten Leerlaufanschlag 34 in der Leerlaufstellung begrenzt, der das in der Leerlaufstellung des Pedals 12 von der Druckfeder 22 erzeugte Rückstellmoment aufnimmt. Die Auflagerkraft des Lagerzapfens 18 bestimmt sich dabei aus der Vorspannkraft der Druckfeder 22 und dem Hebelverhältnis zwischen Angriffspunkt des Leerlaufanschlags 34 mit der Kontaktfläche 18 und dem Angriffspunkt der Druckfeder 22 am zweiten Hebelarm 20.

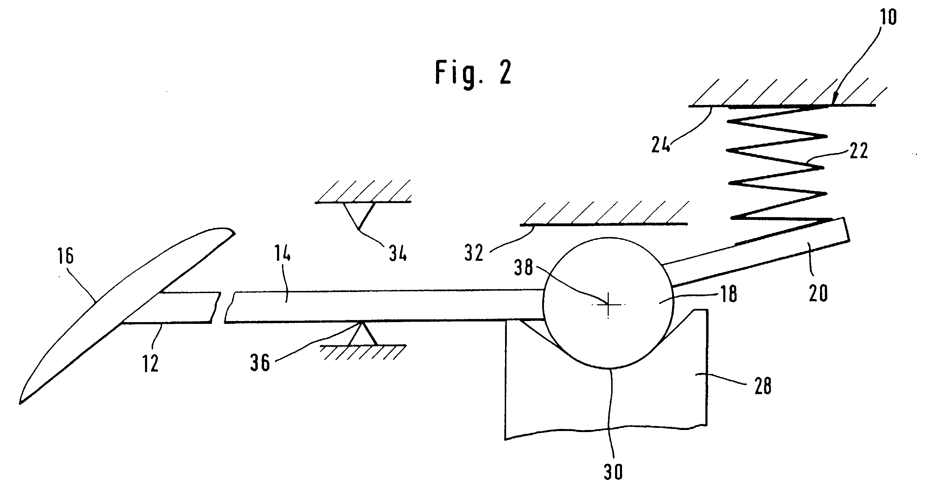

Übt man nun auf die Pedalfläche 16 einen entsprechenden Druck aus, gelangt das Fahrpedal über den Teillastbereich in eine in Figur 2 dargestellte Vollaststellung, die durch einen Vollastanschlag 36 begrenzt ist. Aufgrund der konturierten Kontaktfläche 30 dreht sich der Lagerzapfen 18 dabei um seine Mittelachse 38, ohne daß eine Verlagerung in einer radialen Richtung stattfindet.

Beim Durchtreten des Fahrpedals 12 setzen die in der Kontaktfläche 30 entstehenden Reibkräfte der Betätigung einen Widerstand entgegen, der das Pedalgefühl verbessert, bei statischer Stellung des Pedals 12 jedoch dessen Halten erleichtert.

Bei Automatikgetrieben ist es gewünscht, über die normale Vollgasstellung des Fahrpedals 12 hinaus eine sog. Kick-down-Stellung vorzusehen, die ein Herunterschalten des Getriebes veranlaßt. Bisher ist es üblich, zusätzliche Schalter vorzusehen, die durch das Fahrpedal 12 auslösbar sind. Bei dem zuvor beschriebenen Fahrpedalmodul 10 ist es jedoch ohne derartige zusätzliche Elemente möglich, eine Kick-down-Stellung zu realisieren. Hierbei dient der Vollgasanschlag 36 als loses Auflager des Pedalhebels 14, um welches das gesamte Fahrpedal 12 bei über die Vollgasstellung hinaus erhöhten Pedaldruck verschwenkt. Durch das Verschwenken des Fahrpedals 12 um den Vollgasanschlag 36 hebt der Lagerzapfen 18 unter weiterer Komprimierung der Druckfeder 22 aus dem Lagerelement 28 ab, wobei sein Weg durch den Anschlag 32 begrenzt ist. Die Höhe des zum Erreichen der Kick-down-Stellung notwendigen Kraftsprungs läßt sich durch Variation der Länge des wirksamen Hebelarms zwischen dem Auflagepunkt des Vollastanschlags 36 und der Lagerstelle 28 kundenspezifisch anpassen. Die Veränderung der Drehachse des Fahrpedals 12 führt auch zu einem charakteristischen Signalhub eines mit dem Fahrpedal 12 gekoppelten Pedalstellungssensors (siehe zum Beispiel Figur 4 und 5), so daß die Fahrzeugelektrik beim Erreichen der Kick-down-Stellung die entsprechenden Motor- und Getriebefunktionen veranlassen kann.

Nach dem Loslassen des Fahrpedals 12 drückt die Druckfeder 22 den Lagerzapfen zunächst zurück in die konturierte Kontaktfläche 30 und sorgt anschließend für ein Zurückschwenken des Fahrpedals in die Leerlaufstellung um die Mittelachse 38 des Lagerzapfens 18. Aufgrund der nach oben offenen Bauweise des Lagerelements 28 wird dabei zuverlässig ein Klemmen an der Lagerstelle verhindert, da der Lagerzapfen kleinste Ausweichbewegungen ausführen kann, die zu einem sofortigen Abfall der in der Kontaktfläche wirkenden Reibkräfte führt.

Für die schwimmende Lagerung des Lagerzapfens 18 in dem Lagerelement 28 kann es zweckmäßig sein, magneto-resistive Sensoren zur Erfassung der Pedalstellung einzusetzen, die lediglich auf die Orientierung des Magnetfeldes reagieren und bei einer Verlagerung des Lagerzapfens 18 in radialer Richtung nicht mit undefinierten Signalsprüngen reagieren. Möchte man dennoch auf die bisher üblichen Potentiometer als Pedalstellungssensoren zurückgreifen, empfiehlt sich ein Fahrpedalmodul 40 entsprechend der in Figur 4 und 5 dargestellten Ausführung. Das Fahrpedalmodul 40 ist mit einem Gehäuse 42 dargestellt, das eine Öffnung 44 aufweist, durch die ein Fahrpedal 46 in das Gehäuseinnere verläuft. Die obere Kante 48 der Öffnung 44 bildet dabei den Leerlaufanschlag, während die untere Kante 50 den Vollastanschlag bildet. Eine Druckfeder 52, die mit Vorspannung zwischen einem Hebelarm 54, der mit dem Fahrpedal 46 verbunden ist, und dem Gehäuse angeordnet ist, sorgt für die Rückstellung des Fahrpedals 46.

Das Fahrpedal 46 verfügt über zwei seitlich angeformte Lagerzapfen 56, die in Lagerstellen 58 in den Seitenwänden des Gehäuses 42 gelagert sind. Die Lagerstellen 58 sind zwar allseits geschlossen, jedoch nur im unteren Bereich ihrer Kontaktflächen 60 entsprechend der Kontur der Lagerzapfen 56 ausgebildet. Nach oben hin besitzen sie einen Spielraum 62, wobei die Oberkante 64 der Lagerstelle 58 den Anschlag für die Kick-down-Stellung bildet.

Als Pedalstellungssensor ist bei dieser Ausführungsform ein Potentiometer 66 vorgesehen, dessen Widerstandsbahnen an einer Gehäusewand angeordnet sind. Der Schleifer 68 ist an einem Schwenkhebel 70 angeordnet, der auf einer separaten Welle 72 in dem Gehäuse 42 im wesentlichen spielfrei gelagert ist. Der Schwenkhebel 70 liegt an einer Kurvenkontur 74 an dem Fahrpedal 46 an, so daß es der Gestaltung der Kurvenkontur 74 entsprechend beim Verschwenken des Fahrpedals 46 zu einem Verschwenken des Schwenkhebels 70 und damit zu einer Verstellung des Potentiometers 66 kommt. Die Schwenkbewegung des Schwenkhebels 70 erfolgt gegen das Rückstellmoment einer Torsionsfeder 76, die zwischen dem Gehäuse 42 und der Lagerwelle 72 des Schwenkhebels 70 angeordnet ist. Auch eine Kulissenführung des Schwenkhebels 70 in einer geeigneten Aussparung im Fahrpedal 46 ist denkbar.

Wie zuvor bereits beschrieben, sorgen die an den Kontaktflächen 30, 60 auftretenden Reibkräfte für eine erwünschte pedalkraftabhängige Hysterese. Eine gezielte Beeinflussung der Reibkraft ist durch Variation der Auslegung des Lagerzapfendurchmessers und der Reibpaarung an den Kontaktflächen 30, 60 möglich.

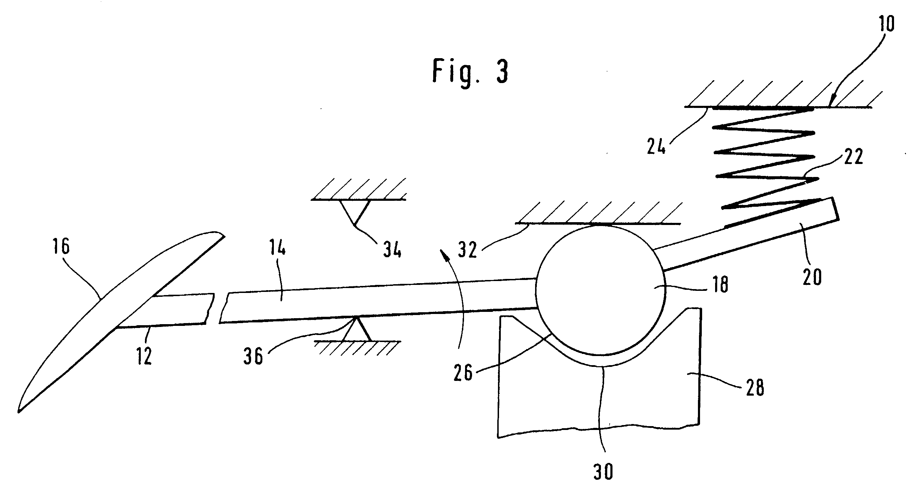

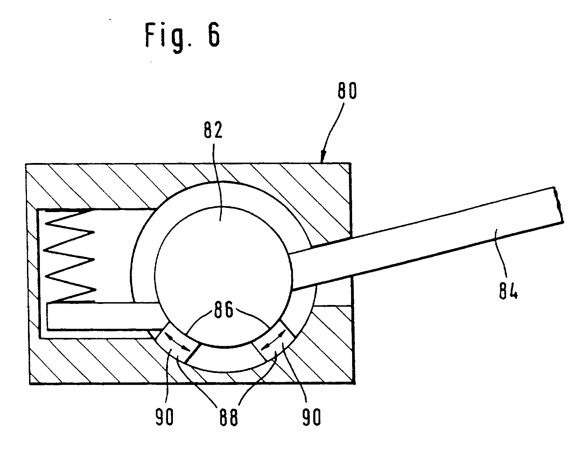

In Figur 6 ist ein weiteres Fahrpedalmodul 80 dargestellt, das trotz vorgewählten Durchmessers des Lagerzapfens 82 des Fahrpedals 84 und vorgewählter Reibpaarung an den Kontaktflächen 86 von Lagerstellen 88 eine gezielte Beeinflussung der Reibkraft ermöglicht. Im übrigen entspricht das Fahrpedalmodul 80 dem in Figur 1 bis 3 dargestellten Fahrpedalmodul 10.

Im Gegensatz zu den zuvor beschriebenen Fahrpedalmodulen 10, 40 verfügt das in Figur 6 gezeigte Fahrpedalmodul 80 über zwei an verschiedenen Stellen des Umfangs des Lagerzapfens 82 angeordnete Lagerstellen 88. Diese sind in Umfangsrichtung verstellbar angeordnet, so daß sich die Angriffspunkte der radialen Abstützkräfte für den Lagerzapfen 82 in gewissem Umfang verstellen lassen. Durch die Variation der Kraftangriffspunkte läßt sich die Hebelgeometrie derart verändern, daß die resultierende Normalkraft, die unmittelbares Maß für die auftretenden Reibkräfte ist, variiert werden kann. Die Lagerstellen 88 bestehen dabei einfach aus Reibbelägen 90, die auf ihr Verschleiß- und Reibverhalten hin optimiert sind. Damit läßt sich ein Typ von Fahrpedalmodulen an die verschiedensten Fahrzeugtypen anpassen.

Da sich in allen Fällen die Reibkraft lediglich aus dem Hebelverhältnis, dem Reibkoeffizienten der Reibpaarungen und den Lagernormalkräften bestimmt, führt eine Abnutzung der Reibbelege nicht zu einer wesentlichen Veränderung der Betätigungscharakteristik der Fahrpedale 12, 46, 84.

Die zuvor beschriebenen Module 10, 40, 80 lassen sich grundsätzlich nicht nur im Zusammenhang mit Fahrpedalen von Kraftfahrzeugen einsetzen, sondern können grundsätzlich in allen "Drive-by-wire"-Systemen Anwendung finden, in welchen eine Hysterese der Betätigungskraft beispielsweise zur Simulation des Reibverhaltens bisher eingesetzter Bowdenzüge simuliert werden soll.

### Bezugszeichenliste:

- 10: Fahrpedalmodul
- 12: Fahrpedal
- 14: Pedalhebel
- 16: Pedalfläche
- 18: Lagerzapfen
- 20: Hebelarm
- 22: Druckfeder
- 24: Gegenlager
- 26: Umfangsfläche
- 28: Lagerelement
- 30: Kontaktfläche
- 32: Anschlag
- 34: Leerlaufanschlag
- 36: Vollastanschlag
- 38: Mittelachse
- 40: Fahrpedalmodul
- 42: Gehäuse
- 44: Öffnung
- 46: Fahrpedal
- 48: obere Kante
- 50: untere Kante
- 52: Druckfeder
- 54: Hebelarm
- 56: Lagerzapfen
- 58: Lagerstelle
- 60: Kontaktfläche
- 62: Spielraum
- 64: Oberkante
- 66: Potentiometer
- 70: Schwenkhebel
- 72: Lagerwelle
- 74: Kurvenkontur
- 76: Torsionsfeder
- 80: Fahrpedalmodul
- 82: Lagerzapfen
- 88: Lagerstellen
- 90: Reibbelag

## Patentansprüche

1. Fahrpedalmodul mit einem in einem Gehäuse (42) schwenkbar gelagerter Fahrpedal (12; 46; 84), das mit pedalkraftabhängiger Hysterese gegen die Kraft einer Rückstellfeder (22; 52) betätigbar ist, und einem Pedalstellungssensor (66), der ein der Pedalstellung entsprechendes elektrisches Signal erzeugt, **dadurch gekennzeichnet, daß** das Fahrpedal (12, 18; 46, 56; 82, 84) in einem nach oben Spiel aufweisenden Lagerelement (28; 58; 88) schwimmend gelagert ist.

2. Fahrpedalmodul nach Anspruch 1, **dadurch gekennzeichnet, daß** das Federelement eine Schraubenfeder (22; 52) ist, die über einen Hebelarm (20; 54) ein dem durch die Betätigungskraft um die Schwenkachse des Fahrpedals (12; 46; 84) aufgebrachten Moment entgegenwirkendes Rückstellmoment erzeugt.

3. Fahrpedalmodul nach Anspruch 1 oder 2, **dadurch gekennzeichnet, daß** die durch das Federelement (22; 52) erzeugte Kraft der Auflagerkraft des Fahrpedals (12; 46; 84) in dem Lagerelement (28; 58; 88) im wesentlichen entgegengerichtet ist.

4. Fahrpedalmodul nach einem der Ansprüche 1 bis 3, **dadurch gekennzeichnet, daß** die Kontaktfläche (30; 60; 86) zwischen dem Lagerelement (28; 58; 88) und einer Umfangsfläche (26) des Fahrpedals (12; 46; 84) als Reibpaarung mit einem bestimmten Reibkoeffizienten ausgebildet ist.

5. Fahrpedalmodul nach Anspruch 4, **dadurch gekennzeichnet, daß** die Kontaktfläche in zwei Umfangssegmentbereiche (86) unterteilt ist, die zwei radiale Lagerstellen (88) bilden.

6. Fahrpedalmodul nach Anspruch 5, **dadurch gekennzeichnet, daß** wenigstens eine radiale Lagerstelle bezüglich der Umfangsfläche des Fahrpedals (82, 84) in Umfangsrichtung verstellbar ist.

7. Fahrpedalmodul nach einem der vorhergehenden Ansprüche, **dadurch gekennzeichnet, daß** der Fahrpedalweg durch einen ersten Anschlag (34; 48) in einer Leerlaufstellung und durch einen zweiten Anschlag (36; 50) in der Vollaststellung begrenzt ist.

8. Fahrpedalmodul nach Anspruch 7, **dadurch gekennzeichnet, daß** der zweite Anschlag (36; 50) bei einem in Vollgasstellung weiter erhöhten Pedaldruck eine zweite Schwenkachse des Fahrpedals (12; 46; 84) bildet, wobei das Fahrpedal (12, 18; 46, 56; 82, 84) im Lagerelement (28; 58; 88) abhebt und in eine Kick-down-Stellung gelangt.

9. Fahrpedalmodul nach Anspruch 8, **dadurch gekennzeichnet, daß** der zweite Anschlag (36; 50) zur Festlegung des zum Erreichen der Kick-down-Stellung notwendigen Pedaldrucks in einem bestimmten Abstand zum Lagerelement (28; 58; 88) angeordnet ist.

10. Fahrpedalmodul nach Anspruch 8 oder 9, **dadurch gekennzeichnet, daß** ein dritter Anschlag (32; 64) den Fahrpedalweg in der Kick-down-Stellung begrenzt.

11. Fahrpedalmodul nach einem der vorhergehenden Ansprüche, **dadurch gekennzeichnet, daß** der Pedalstellungssensor magneto-resistiv arbeitet.

12. Fahrpedalmodul nach einem der Ansprüche 1 bis 10, **dadurch gekennzeichnet, daß** der Pedalstellungssensor wenigstens ein Potentiometer (66) aufweist, das vom Fahrpedal (46) getrennt gelagert ist.

13. Fahrpedalmodul nach Anspruch 12, **dadurch gekennzeichnet, daß** das Potentiometer (66) über Elemente mit Spielausgleich (70, 72, 74, 76) mechanisch entkoppelt von dem Fahrpedal (46) betätigbar ist.

14. Fahrpedalmodul nach Anspruch 12 oder 13, **dadurch gekennzeichnet, daß** an dem Potentiometer (66) ein Hebelarm (70) vorgesehen ist, der unter einer durch eine Drehfeder (76) aufgebrachten Anlagekraft an einer Kurvenkontur (74) an dem Fahrpedal (46) anliegt.

15. Fahrpedalmodul nach Anspruch 12, 13 oder 14, **dadurch gekennzeichnet, daß** an dem Potentiometer ein Hebelarm vorgesehen ist, der in einer Kulisse im Fahrpedal geführt ist.

## Claims

1. An accelerator-pedal module having an accelerator pedal (12; 46; 84) which is mounted pivotably in a housing (42) and can be actuated, counter to the force of a restoring spring (22; 52), with pedal-force-dependent hysteresis, and having a pedal-position sensor (66) which produces an electric signal corresponding to the pedal position, **characterized in that** the accelerator pedal (12, 18; 46, 56; 82, 84) is mounted in a floating manner in a bearing element (28; 58; 88) which has play in the upward direction.

2. The accelerator-pedal module according to Claim 1, **characterized in that** the spring element is a helical spring (22; 52) which, via a lever arm (20; 54), produces a restoring moment which counteracts the moment provided by the actuating force about the pivot axis of the accelerator pedal (12; 46; 84).

3. The accelerator-pedal module according to Claim 1 or 2, **characterized in that** the force which is produced by the spring element (22; 52) is directed essentially counter to the bearing force of the accelerator pedal (12; 46; 84) in the bearing element (28; 58; 88).

4. The accelerator-pedal module according to one of Claims 1 to 3, **characterized in that** the contact surface (30; 60; 86) between the bearing element (28; 58; 88) and a circumferential surface (26) of the accelerator pedal (12; 46; 84) is designed as a friction pairing with a certain coefficient of friction.

5. The accelerator-pedal module according to Claim 4, **characterized in that** the contact surface is subdivided into two circumferential-segment regions (86), which form two radial bearing locations (88).

6. The accelerator-pedal module according to Claim 5, **characterized in that** at least one radial bearing location can be adjusted in the circumferential direction in relation to the circumferential surface of the accelerator pedal (82, 84).

7. The accelerator-pedal module according to one of the preceding claims, **characterized in that** the accelerator-pedal travel is limited in an idling position by a first stop (34; 48) and in the full-load position by a second stop (36; 50).

8. The accelerator-pedal module according to Claim 7, **characterized in that**, in the case of further-increased pedal pressure in the full-throttle position, the second stop (36; 50) forms a second pivot axis of the accelerator pedal (12; 46; 84), the accelerator pedal (12, 18; 46, 56; 82, 84) lifting off from the bearing element (28; 58; 88) and passing into a kickdown position.

9. The accelerator-pedal module according to Claim 8, **characterized in that** the second stop (36; 50), for defining the pedal pressure necessary for achieving the kickdown position, is arranged at a certain distance from the bearing element (28; 58; 88).

10. The accelerator-pedal module according to Claim 8 or 9, **characterized in that** a third stop (32; 64) limits the accelerator-pedal travel in the kickdown position.

11. The accelerator-pedal module according to one of the preceding claims, **characterized in that** the pedal-position sensor operates with magnetoresistive action.

12. The accelerator-pedal module according to one of Claims 1 to 10, **characterized in that** the pedal-position sensor has at least one potentiometer (66), which is mounted separately from the accelerator pedal (46).

13. The accelerator-pedal module according to Claim 12, **characterized in that** the potentiometer (66) can be actuated via elements with play compensation (70, 72, 74, 76) separately in mechanical terms from the accelerator pedal (46).

14. The accelerator-pedal module according to Claim 12 or 13, **characterized in that** provided on the potentiometer (66) is a lever arm (70) which butts, under an abutment force provided by a torsion spring (76), against a curved contour (74) on the accelerator pedal (46).

15. The accelerator-pedal module according to Claim 12, 13 or 14, **characterized in that** provided on the potentiometer is a lever arm which is guided in a guide slot in the accelerator pedal.

## Revendications

1. Module de pédale d'accélérateur avec une pédale d'accélérateur (12 ; 46 ; 84) montée pivotante dans un boîtier (42), laquelle pédale est adaptée à être actionnée à l'encontre de la force exercée par un ressort de rappel (22 ; 52), créant un phénomène d'hystérésis dépendant de l'effort sur la pédale, et avec un capteur de position de la pédale (66) qui produit un signal électrique correspondant à la position de la pédale, **caractérisé en ce que** la pédale d'accélérateur (12, 18 ; 46, 56 ; 82, 84) est montée flottante dans un élément de palier (28 ; 58 ; 88) présentant un jeu vers le haut.

2. Module de pédale d'accélérateur selon la revendication 1, **caractérisé en ce que** l'élément de ressort est un ressort hélicoïdal (22 ; 52) qui produit, par un bras de levier (20 ; 54), un couple de rappel agissant à l'opposé du couple appliqué par la force d'actionnement autour de l'axe de pivotement de la pédale d'accélérateur (12 ; 46 ; 84).

3. Module de pédale d'accélérateur selon la revendication 1 ou 2, **caractérisé en ce que** la force produite par l'élément de ressort (22 ; 52) est sensiblement opposée à la force d'appui de la pédale d'accélérateur (12 ; 46 ; 84) dans l'élément de palier (28 ; 58 ; 88).

4. Module de pédale d'accélérateur selon l'une quelconque des revendications 1 à 3, **caractérisé en ce que** la surface de contact (30 ; 60 ; 86) entre l'élément de palier (28 ; 58 ; 88) et une surface circonférentielle (26) de la pédale d'accélérateur (12 ; 46 ; 84) est réalisée sous forme d'un appairage de frottements avec un certain coefficient de frottement.

5. Module de pédale d'accélérateur selon la revendication 4, **caractérisé en ce que** la surface de contact est partagée en deux segments circonférentiels (86) formant deux zone de palier (88) radiales.

6. Module de pédale d'accélérateur selon la revendication 5, **caractérisé en ce qu'**une zone de palier radiale au moins est déplaçable dans la direction circonférentielle par rapport à la surface circonférentielle de la pédale d'accélérateur (82, 84).

7. Module de pédale d'accélérateur selon l'une quelconque des revendications précédentes, **caractérisé en ce que** la course de la pédale d'accélérateur est limitée par une première butée (34 ; 48) dans une position de ralenti et par une deuxième butée (36 ; 50) dans la position d'accélération à fond.

8. Module de pédale d'accélérateur selon la revendication 7, **caractérisé en ce que**, lorsque la pression sur la pédale est accrue dans la position d'accélération à fond, la deuxième butée (36 ; 50) forme un deuxième axe de pivotement de la pédale d'accélérateur (12 ; 46 ; 84), laquelle pédale d'accélérateur (12, 18 ; 46, 56 ; 82, 84) est soulevée de l'élément de palier (28 ; 58 ; 88) et amenée dans une position de kick-down.

9. Module de pédale d'accélérateur selon la revendication 8, **caractérisé en ce que** la deuxième butée (36 ; 50) est disposée à une certaine distance de l'élément de palier (28 ; 58 ; 88) en vue de déterminer la pression de pédale requise pour atteindre la position de kick-down.

10. Module de pédale d'accélérateur selon la revendication 8 ou 9, **caractérisé en ce qu'**une troisième butée (32 ; 64) limite la course de la pédale d'accélérateur vers la position de kick-down.

11. Module de pédale d'accélérateur selon l'une quelconque des revendications précédentes, **caractérisé en ce que** le capteur de position de la pédale est un capteur magnétorésistif.

12. Module de pédale d'accélérateur selon l'une quelconque des revendications 1 à 10, **caractérisé en ce que** le capteur de position de la pédale comporte au moins un potentiomètre (66) monté distinct de la pédale d'accélérateur (46).

13. Module de pédale d'accélérateur selon la revendication 12, **caractérisé en ce que** le potentiomètre (66) est adapté à être actionné par l'intermédiaire d'éléments avec compensation du jeu (70, 72, 74, 76), de façon désaccouplée mécaniquement de la pédale d'accélérateur (46).

14. Module de pédale d'accélérateur selon la revendication 12 ou 13, **caractérisé en ce qu'**un bras de levier (70) est prévu sur le potentiomètre (66), lequel bras de levier est en appui contre une surface courbe (74) de la pédale d'accélérateur (46) sous l'effet d'une force d'appui exercée par un ressort de torsion (76).

15. Module de pédale d'accélérateur selon la revendication 12, 13 ou 14, **caractérisé en ce qu'**un bras de levier est prévu sur le potentiomètre, lequel bras de levier est guidé dans une coulisse prévue dans la pédale d'accélérateur.
